# EUROPÄISCHE PATENTSCHRIFT

(11) **EP 2 802 477 B1**
(45) Veröffentlichungstag und Bekanntmachung des Hinweises auf die Patenterteilung: **31.10.2018**
(21) Anmeldenummer: 12812163.9
(22) Anmeldetag: 08.12.2012
(51) Int. Cl.: B60K 37/06, G06F 3/01

(54) **VERFAHREN UND VORRICHTUNG ZUM BEDIENEN VON AUF EINER ANZEIGEEINHEIT EINES FAHRZEUGS ANGEZEIGTEN FUNKTIONEN UNTER VERWENDUNG VON IM DREIDIMENSIONALEN RAUM AUSGEFÜHRTEN GESTEN SOWIE BETREFFENDES COMPUTERPROGRAMMPRODUKT**
METHOD AND DEVICE FOR OPERATING FUNCTIONS DISPLAYED ON A DISPLAY UNIT OF A VEHICLE USING GESTURES WHICH ARE CARRIED OUT IN A THREE-DIMENSIONAL SPACE, AND CORRESPONDING COMPUTER PROGRAM PRODUCT
PROCÉDÉ ET DISPOSITIF DE COMMANDE DE FONCTIONS AFFICHÉES SUR L'UNITÉ D'AFFICHAGE D'UN VÉHICULE, À L'AIDE DE GESTES EFFECTUÉS DANS L'ESPACE TRIDIMENSIONNEL, ET PRODUIT-PROGRAMME INFORMATIQUE CORRESPONDANT

(30) Priorität: 09.01.2012 DE 102012000201
(43) Veröffentlichungstag der Anmeldung: 19.11.2014
(73) Patentinhaber: Daimler AG, 70327 Stuttgart (DE)
(72) Erfinder: ENTENMANN, Volker, 71563 Affalterbach (DE); MATTES, Stefan, 70184 Stuttgart (DE); REISINGER, Jörg, 74369 Löchgau (DE); ZHANG-XU, Tingting, 71069 Sindelfingen (DE)
(74) Vertreter: JENSEN & SON
(86) Internationale Anmeldenummer: PCT/EP2012/005081
(87) Internationale Veröffentlichungsnummer: WO 2013/104390

(56) Entgegenhaltungen:
- DE-A1-102004 038 965
- DE-A1-102006 037 156
- DE-A1-102009 046 376

## Beschreibung

Die vorliegende Erfindung betrifft ein Verfahren und eine Vorrichtung zum Bedienen von auf einer Anzeigeeinheit eines Fahrzeugs angezeigten Funktionen unter Verwendung von im dreidimensionalen Raum ausgeführten Gesten sowie ein betreffendes Computerprogrammprodukt.

Aus der WO 2011/003947 A1 sind ein Verfahren und eine Vorrichtung zum Bedienen von auf einer Anzeigeeinheit eines Fahrzeugs angezeigten Funktionen unter Verwendung von im dreidimensionalen Raum ausgeführten Gesten bekannt, bei denen bestimmt wird, ob eine im dreidimensionalen Raum durchgeführte Geste erfasst wird oder nicht, bestimmt wird, ob die erfasste Geste eine einem Steuern einer Funktion zugeordnete Geste ist oder nicht, und die Funktion gesteuert wird, falls bestimmt wird, dass die erfasste Geste die dem Steuern der Funktion zugeordnete Geste ist.

Da unmittelbar bestimmt wird, ob eine erfasste Geste eine dem Steuern einer Funktion zugeordnete Geste ist oder nicht, kann eine Bewegung zum Beispiel eines Fingers oder einer Hand eines Nutzers, die in einem Erfassungsbereich einer Gesten-Erfassungseinrichtung durchgeführt wird und nicht zum Steuern einer Funktion gedacht ist, fehlerhaft als die dem Steuern der Funktion zugeordnete Geste bestimmt werden. Folglich wird in diesem Fall die Funktion fehlerhaft bzw. unbeabsichtigt ausgeführt.

Aus jeder der DE 10 2005 037 156 A1, der DE 10 2004 038 965 A1 und der DE 10 2009 046 376 A1 ist ein Verfahren gemäß dem Oberbegriff des Anspruchs 1 bekannt.

Es ist die Aufgabe der vorliegenden Erfindung, ein Verfahren, eine Vorrichtung und ein betreffendes Computerprogrammprodukt zu schaffen, die ein gesten-basiertes Bedienen von Funktionen in einem Fahrzeug auf eine einfache und zuverlässige Weise zulassen.

Diese Aufgabe wird mit den in den unabhängigen Ansprüchen angegebenen Maßnahmen gelöst.

Weitere vorteilhafte Ausgestaltungen der vorliegenden Erfindung sind Gegenstand der abhängigen Ansprüche.

Gemäß einem ersten Aspekt weist ein Verfahren zum Bedienen von auf einer Anzeigeeinheit eines Fahrzeugs angezeigten Funktionen unter Verwendung von im dreidimensionalen Raum ausgeführten Gesten a) ein Bestimmen, ob eine im dreidimensionalen Raum durchgeführte erste Geste erfasst wird oder nicht, b) ein Bestimmen, ob die erste Geste eine einem Aktivieren eines Steuerns einer Funktion zugeordnete Geste ist oder nicht, falls bestimmt wird, dass die erste Geste erfasst worden ist, c) ein Aktivieren des Steuerns der Funktion, falls bestimmt wird, dass die erfasste erste Geste die dem Aktivieren des Steuerns der Funktion zugeordnete Geste ist, d) ein Bestimmen, ob eine im dreidimensionalen Raum durchgeführte zweiten Geste erfasst wird oder nicht, e) ein Bestimmen, ob die erfasste zweite Geste eine dem Steuern der Funktion zugeordnete Geste ist oder nicht, falls bestimmt wird, dass die zweite Geste erfasst worden ist, und f) ein Steuern der Funktion auf, falls bestimmt worden ist, dass die erfasste erste Geste die dem Aktivieren des Steuerns der Funktion zugeordnete Geste ist, und falls bestimmt wird, dass die erfasste zweite Geste die dem Steuern der Funktion zugeordnete Geste ist. In Schritt f) wird eine Richtung des Steuerns der Funktion durch eine Richtung eines Durchführens der zweiten Geste festgelegt und verriegelt. Das Verriegeln der Richtung des Steuerns der Funktion bei wiederholtem Durchführen der Schritte d) bis f) unmittelbar hintereinander wird nach Durchführen der Schritte a) bis c) aufrecht erhalten.

Gemäß einer Ausgestaltung wird in Schritt b) bestimmt, dass die erfasste erste Geste die dem Aktivieren des Steuerns der Funktion zugeordnete Geste ist, falls die erfasste erste Geste eine erste vorbestimmte Geste ist, die für eine erste vorbestimmte Zeitdauer in einem ersten vorbestimmten Bereich des dreidimensionalen Raums statisch ist.

Gemäß einer weiteren Ausgestaltung wird in Schritt e) bestimmt, dass die erfasste zweite Geste die dem Steuern der Funktion zugeordnete Geste ist, falls die erfasste zweite Geste eine zweite vorbestimmte Geste ist, die in einem zweiten vorbestimmten Bereich des dreidimensionalen Raums dynamisch ist.

Gemäß einer weiteren Ausgestaltung weist das Verfahren g) ein Bestimmen, ob eine im dreidimensionalen Raum durchgeführte dritte Geste erfasst wird oder nicht, h) ein Bestimmen, ob die dritte Geste eine einem Entriegeln der Richtung des Steuerns der Funktion zugeordnete Geste ist oder nicht, falls bestimmt wird, dass die dritte Geste erfasst worden ist, und i) ein Entriegeln der Richtung des Steuerns der Funktion auf, falls bestimmt wird, dass die erfasste dritte Geste die dem Entriegeln der Richtung des Steuerns der Funktion zugeordnete Geste ist.

Gemäß einer weiteren Ausgestaltung wird in Schritt h) bestimmt, dass die erfasste dritte Geste die dem Entriegeln der Richtung des Steuerns der Funktion zugeordnete Geste ist, falls bestimmt wird, dass die erfasste dritte Geste eine dritte vorbestimmte Geste ist, die für eine dritte vorbestimmte Zeitdauer in einem dritten vorbestimmten Bereich des dreidimensionalen Raums statisch ist.

Gemäß einer weiteren Ausgestaltung wird in Schritt c) ein das Aktivieren der Funktion darstellendes Anzeigeelement auf der Anzeigeeinheit angezeigt.

Gemäß einer weiteren Ausgestaltung wird das das Aktivieren der Funktion darstellende Anzeigelement nach einer vierten vorbestimmten Zeitdauer, in der keine Geste erfasst wird, nicht mehr auf der Anzeigeeinheit angezeigt.

Gemäß einem zweiten Aspekt weist eine Vorrichtung zum Bedienen von auf einer Anzeigeeinheit eines Fahrzeugs angezeigten Funktionen unter Verwendung von im dreidimensionalen Raum ausgeführten Gesten Einrichtungen auf, die dazu ausgelegt sind, das zuvor beschriebene Verfahren oder dessen Ausgestaltungen auszuführen.

Gemäß einer Ausgestaltung weist die Vorrichtung eine Infratrot-Erfassungseinrichtung zum Erfassen der im dreidimensionalen Raum ausgeführten Gesten auf.

Gemäß einer weiteren Ausgestaltung weist die Infrarot-Erfassungsvorrichtung mehrere Infrarot-Sensoren auf, die in einer oder mehreren Zeilen angeordnet sind.

Gemäß einem dritten Aspekt ist ein Computerprogrammprodukt zum Bedienen von auf einer Anzeigeeinheit eines Fahrzeugs angezeigten Funktionen unter Verwendung von im dreidimensionalen Raum ausgeführten Gesten dazu ausgelegt, im Zusammenwirken mit einem Computer oder einem Computersystem unmittelbar oder, nach Ausführen einer vorbestimmten Routine, mittelbar das zuvor beschriebene Verfahren oder dessen Ausgestaltungen auszuführen.

Gemäß den ersten bis dritten Aspekten und deren Ausgestaltungen wird verhindert, dass eine Bewegung zum Beispiel eines Fingers oder einer Hand eines Nutzers, die nicht zum Steuern einer Funktion gedacht ist, fehlerhaft als die dem Steuern der Funktion zugeordnete Geste bestimmt wird, da vor einem Erfassen der dem Steuern der Funktion zugeordneten Geste eine einem Aktivieren eines Steuerns einer Funktion zugeordnete Geste erfasst werden muss, mittels welcher das Steuern der Funktion aktiviert wird.

Die vorliegende Erfindung wird nachstehend anhand eines Ausführungsbeispiels unter Bezugnahme auf die beiliegende Zeichnung näher erläutert.

In der Zeichnung zeigt:
Fig. 1 eine schematische Darstellung eines grundlegenden Bedienkonzepts gemäß einem Ausführungsbeispiel der vorliegenden Erfindung;
Fig. 2 eine weitere schematische Darstellung des grundlegenden Bedienkonzepts gemäß dem Ausführungsbeispiel der vorliegenden Erfindung;
Fig. 3 eine schematische Darstellung eines Aufbaus einer Anzeigeeinheit und einer Erfassungseinrichtung gemäß dem Ausführungsbeispiel der vorliegenden Erfindung; und
Fig. 4 ein Flussdiagramm eines Verfahrens zum Bedienen von auf der Anzeigeeinheit dargestellten Funktionen unter Verwendung von im dreidimensionalen Raum ausgeführten Gesten gemäß dem Ausführungsbeispiel der vorliegenden Erfindung.

Nachstehend erfolgt die Beschreibung eines Ausführungsbeispiels der vorliegenden Erfindung.

Es ist anzumerken, dass im weiteren Verlauf davon ausgegangen wird, dass eine Anzeigeeinheit eine vorzugsweise zentrale Anzeige eines Fahrzeugs, vorzugsweise eines Kraftfahrzeugs, ist und einen Verfahren zum Bedienen von auf der Anzeigeeinheit dargestellten Funktionen unter Verwendung von im dreidimensionalen Raum ausgeführten Gesten in dem Fahrzeug durchgeführt wird.

Weiterhin ist eine im weiteren Verlauf beschriebene Geste eine Geste, die durch einen Nutzer des Fahrzeugs mittels einer Hand oder eines Fingers des Nutzers im dreidimensionalen Raum durchgeführt wird, ohne eine Anzeige, wie zum Beispiel einen Touchscreen, oder ein Bedienelement, wie zum Beispiel einen Touchpad, zu berühren.

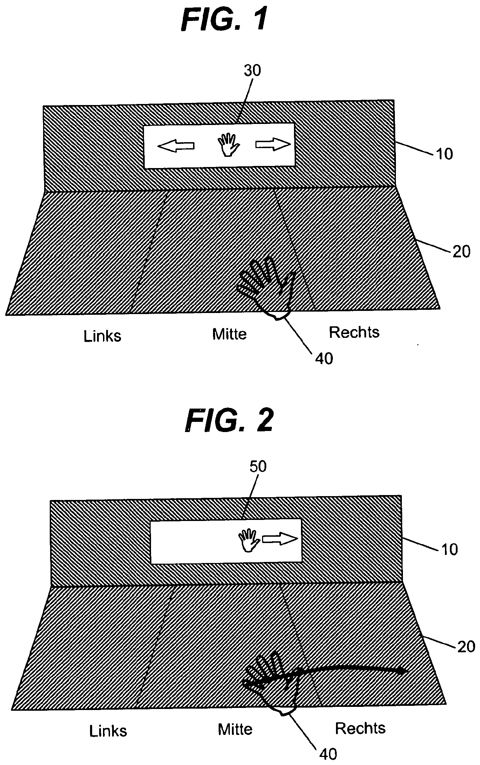

Fig. 1 zeigt eine schematische Darstellung eines grundlegenden Bedienkonzepts gemäß dem Ausführungsbeispiel der vorliegenden Erfindung.

In Fig. 1 bezeichnet das Bezugszeichen 10 eine Anzeigeeinheit, bezeichnet das Bezugszeichen 20 einen Erfassungsbereich einer Erfassungseinrichtung, bezeichnet das Bezugszeichen 30 ein erstes Fenster und bezeichnet das Bezugszeichen 40 eine Hand eines Nutzers.

Das grundlegende Bedienkonzept ist, dass eine Gestensteuerung zum Bedienen von auf der Anzeigeeinheit 10 angezeigten Funktionen mittels einer durch eine Hand 40 oder eines Fingers eines Nutzers durchgeführten ersten Geste im dreidimensionalen Raum aktiviert wird. Falls die erste Geste in dem Erfassungsbereich 20 erfasst wird und eine erste vorbestimmte Geste ist, wird auf der Anzeigeeinheit 10 das erste Fenster angezeigt, das ein Erfassen der ersten vorbestimmten Geste anzeigt. Das Fenster zeigt mögliche Bedienrichtungen für eine zu steuernde Funktion an.

Die erste vorbestimmte Geste ist eine statische Geste, die für eine erste vorbestimmte Zeitdauer in einem ersten vorbestimmten Bereich des dreidimensionalen Raums statisch ist. Wie es in Fig. 1 gezeigt ist, ist die erste vorbestimmte Geste zum Beispiel eine statische Geste, die durch Bewegen der Hand 40 oder des Fingers des Nutzers in einen mit "Mitte" bezeichneten Teil des Erfassungsbereichs 20 und anschließendes vorzugsweise kurzzeitiges Verharren der Hand 40 oder des Fingers des Nutzers für die erste vorbestimmte Zeitdauer in dem mit "Mitte" bezeichneten Teil des Erfassungsbereichs 20 durchgeführt wird. Analog kann die erste vorbestimmte Geste eine statische Geste sein, die durch Bewegen der Hand 40 oder des Fingers des Nutzers in einen mit "Links" bezeichneten Teil des Erfassungsbereichs 20 und anschließendes vorzugsweise kurzzeitiges Verharren der Hand 40 oder des Fingers des Nutzers für die erste vorbestimmte Zeitdauer in dem mit "Links" bezeichneten Teil des Erfassungsbereichs 20 durchgeführt wird oder die durch Bewegen der Hand 40 oder des Fingers des Nutzers in einen mit "Rechts" bezeichneten Teil des Erfassungsbereichs 20 und anschließendes vorzugsweise kurzzeitiges Verharren der Hand 40 oder des Fingers des Nutzers für die erste vorbestimmte Zeitdauer in dem mit "Rechts" bezeichneten Teil des Erfassungsbereichs 20 durchgeführt wird.

Fig. 2 zeigt eine weitere schematische Darstellung des grundlegenden Bedienkonzepts gemäß dem Ausführungsbeispiel der vorliegenden Erfindung.

In Fig. 2 bezeichnen die gleichen Bezugszeichen wie in Fig. 1 die gleichen Elemente und bezeichnet das Bezugszeichen 50 ein zweites Fenster.

Falls nach dem Erfassen der ersten Geste zum ersten Mal eine zweite Geste erfasst wird, die eine zweite vorbestimmte Geste ist, die einem Steuern einer Funktion zugeordnet ist, wird in Abhängigkeit der zweiten vorbestimmten Geste eine Bedienrichtung der zu steuernden Funktion verriegelt und die zu steuernde Funktion in der verriegelten Bedienrichtung gesteuert.

Die zweite vorbestimmte Geste ist eine dynamische Geste, die in einem zweiten vorbestimmten Bereich des dreidimensionalen Raums dynamisch ist. Wie es in Fig. 2 durch einen Pfeil gezeigt ist, ist die zweite vorbestimmte Geste zum Beispiel eine dynamische Geste, die durch Bewegen der Hand 40 oder des Fingers des Nutzers von dem mit "Mitte" bezeichneten Teil des Erfassungsbereichs 20 in den mit "Rechts" bezeichneten Teil des Erfassungsbereichs 20 durchgeführt wird. Analog kann die zweite vorbestimmte Geste eine dynamische Geste sein, die durch Bewegen der Hand 40 oder des Fingers des Nutzers von dem mit "Links" bezeichneten Teil des Erfassungsbereichs 20 in den mit "Mitte" bezeichneten Teil des Erfassungsbereichs 20 durchgeführt wird, die durch Bewegen der Hand 40 oder des Fingers des Nutzers von dem mit "Mitte" bezeichneten Teil des Erfassungsbereichs 20 in den mit "Links" bezeichneten Teil des Erfassungsbereichs 20 durchgeführt wird, die durch Bewegen der Hand 40 oder des Fingers des Nutzers von dem mit "Rechts" bezeichneten Teil des Erfassungsbereichs 20 in den mit "Mitte" bezeichneten Teil des Erfassungsbereichs 20 durchgeführt wird, die durch Bewegen der Hand 40 oder des Fingers des Nutzers von dem mit "Links" bezeichneten Teil des Erfassungsbereichs 20 über den mit "Mitte" bezeichneten Teil des Erfassungsbereichs 20 in den mit "Rechts" bezeichneten Teil des Erfassungsbereichs 20 durchgeführt wird oder die die durch Bewegen der Hand 40 oder des Fingers des Nutzers von dem mit "Rechts" bezeichneten Teil des Erfassungsbereichs 20 über den mit "Mitte" bezeichneten Teil des Erfassungsbereichs 20 in den mit "Links" bezeichneten Teil des Erfassungsbereichs 20 durchgeführt wird.

Die zweite vorbestimmte Geste ist eine Wischbewegung der Hand 40 oder des Fingers des Nutzers. Eine Bedienrichtung für die zu steuernde Funktion wird in Übereinstimmung mit einer Richtung des ersten Durchführens der zweiten vorbestimmten Geste verriegelt. Wenn zum Beispiel die zweite vorbestimmte Geste in Richtung des Pfeils in der Nähe der Hand 40 in Fig. 2 durchgeführt wird, wird die Bedienrichtung in die Richtung verriegelt, die durch den Pfeil in dem zweiten Fenster 50 in Fig. 2 gezeigt ist.

Nach dem Verriegeln der Bedienrichtung für die zu steuernde Funktion durch das erste Erfassen der zweiten vorbestimmten Geste kann ein nachfolgendes erneutes, ggf. mehrfaches und schnell aufeinanderfolgendes Erfassen der zweiten vorbestimmten Geste die zu steuernde Funktion sicher in der verriegelten Bedienrichtung steuern.

Durch eine in dem Erfassungsbereich 20 durchgeführte dritte vorbestimmte Geste kann die verriegelte Bedienrichtung wieder entriegelt werden. Die dritte vorbestimmte Geste kann ähnlich der ersten vorbestimmten Geste eine statische Geste sein, die für eine dritte vorbestimmte Zeitdauer in einem dritten vorbestimmten Bereich des dreidimensionalen Raums statisch ist. Die vorbestimmten ersten und dritten Zeitdauern der ersten und dritten vorbestimmten Gesten können zueinander gleich oder unterschiedlich sein und die vorbestimmten ersten und dritten Bereiche des dreidimensionalen Raums der ersten und dritten vorbestimmten Gesten können zueinander gleich oder unterschiedlich sein.

Nach dem Entriegeln der Bedienrichtung durch die dritte vorbestimmte Geste kann durch erneutes erstmaliges Erfassen einer zweiten vorbestimmten Geste die Bedienrichtung verriegelt werden und durch nachfolgendes erneutes, ggf. mehrfaches und schnell aufeinanderfolgendes Erfassen der zweiten vorbestimmten Geste die zu steuernde Funktion sicher in der verriegelten Bedienrichtung gesteuert werden.

Weiterhin wird ein Anzeigen des ersten Fensters 30 oder des zweiten Fensters 50 nach Eintreten eines vorbestimmten Abbruchkriteriums, wie zum Beispiel eines Verstreichens einer vierten vorbestimmten Zeitdauer ohne Erfassen einer weiteren Geste usw., beendet.

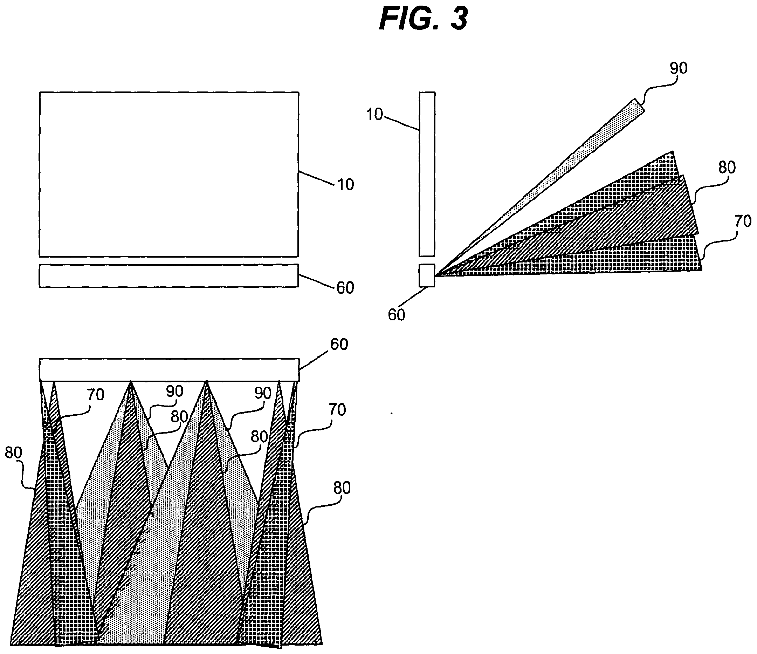

Fig. 3 zeigt eine schematische Darstellung eines Aufbaus einer Anzeigeeinheit und einer Erfassungseinrichtung gemäß dem Ausführungsbeispiel der vorliegenden Erfindung.

In Fig. 3 bezeichnet das Bezugszeichen 10 die Anzeigeeinheit, bezeichnet das Bezugszeichen 60 eine Erfassungseinrichtung, bezeichnet das Bezugszeichen 70 Erfassungsbereiche für ein Unterscheiden eines Bedienvorgangs durch einen Fahrer oder einen Beifahrer des Fahrzeugs, bezeichnet das Bezugszeichen 80 Erfassungsbereiche für ein Erfassen von jeweiligen Gesten und bezeichnet das Bezugszeichen 90 Erfassungsbereiche für ein Begrenzen des Bedienbereichs.

Die Erfassungseinrichtung 60 ist eine Infrarot-Erfassungseinrichtung, die mehrere Infrarot-Sensoren aufweist, die in einer oder mehreren Zeilen angeordnet sind, und dient dazu, jeweilige im dreidimensionalen Raum ausgeführte Gesten berührungslos zu erfassen.

Mittels der mehreren Infarot-Sensoren werden die verschiedenen Erfassungsbereiche 70 bis 90 festgelegt. Die Sensorzeile weist vorzugsweise eine Höhe von ungefähr 6 mm auf und die verschiedenen Erfassungsbereiche 70 bis 90 weisen vorzugsweise eine Länge von 10 bis 40 cm, bevorzugter ungefähr 30 cm auf. Das heißt, die Infrarotsensoren weisen eine Erfassungsreichweite von vorzugsweise 10 bis 40 cm, bevorzugter ungefähr 30 cm auf.

Wie es in der in Fig. 3 links unten gezeigten Draufsicht dargestellt ist, legen die Erfassungsbereiche 90 für ein Begrenzen des Bedienvorgangs Bereiche fest, in denen jeweilige Gesten als gültige Gesten erfasst werden können, und legen die Erfassungsbereiche 70 Bereiche fest, in denen unterschieden werden kann, ob eine jeweilige erfasste Geste von einem Fahrer oder einem Beifahrer durchgeführt wird. Zum Beispiel wird in einem Fall eines Fahrzeugs mit Linkslenkung eine Geste, die durch den linken Erfassungsbereich 70 durchgeführt wird, als eine von dem Fahrer durchgeführte Geste erfasst, wohingegen eine Geste, die durch den rechten Erfassungsbereich 70 geht, als eine von dem Beifahrer durchgeführte Geste erfasst wird.

Ein derartiges Unterscheiden, ob eine Geste von einem Fahrer oder einem Beifahrer durchgeführt wird, ist insbesondere bei einem sogenannten SplitView-Display vorteilhaft, das imstande ist, gleichzeitig unterschiedliche Informationen für den Fahrer und den Beifahrer anzuzeigen. Ebenso ist das Unterscheiden, ob eine Geste von einem Fahrer oder einem Beifahrer durchgeführt wird, im Hinblick auf ein ergonomisches Bedienen durch den Fahrer oder den Beifahrer vorteilhaft.

Im weiteren Verlauf wird davon ausgegangen, dass die erfasste Geste sowohl eine von dem Fahrer ausgeführte Geste als auch eine von dem Beifahrer ausgeführte Geste sein kann.

Wie es weiterhin in der in Fig. 3 links unten gezeigten Draufsicht dargestellt ist, legen die Erfassungsbereiche 80 für ein Erfassen von jeweiligen Gesten Bereiche fest, mittels denen sowohl statische als auch dynamische Gesten erfasst und unterschieden werden können.

Die Infrarot-Sensoren weisen jeweils einen Sender und einen Empfänger auf. InfrarotLicht wird von einem jeweiligen Sender gesendet, von einem Objekt, wie zum Beispiel einer Hand oder eines Fingers eines Nutzers, reflektiert und von einem jeweiligen, dem Sender zugeordneten Empfänger empfangen. Ein Ausgangssignal eines jeweiligen Infrarot-Sensors ist abhängig von einer Entfernung des reflektierenden Objekts, einer Größe des reflektierenden Objekts und einer Reflektivität einer Oberfläche des reflektierenden Objekts. Die Infrarot-Sensoren liefern keine eindeutige Positions- und Abstandsinformation des reflektierenden Objekts, weisen jedoch den Vorteil auf, dass eine Sensorkonfiguration flexibel ist und eine Reichweite der Infrarot-Sensoren relativ groß ist.

Im Wesentlichen ist ein Ausgangssignal der Infrarot-Sensoren ein Lichtschrankensignal mit einem Zustand von entweder "0" oder "1", wobei einer der Zustände von "0" und "1" ein Vorhandensein eines Objekts in dem Erfassungsbereich eines Infrarot-Sensors anzeigt und der andere der Zustände von "0" und "1" ein Nichtvorhandensein des Objekts in dem Erfassungsbereich des Infrarot-Sensors anzeigt.

Durch eine Hand oder einen Finger des Nutzers durchgeführte Gesten, die durch die Erfassungsbereiche 90 für ein Begrenzen des Bedienbereichs erfasst worden sind, werden anhand der Erfassungsbereiche 80 für ein Erfassen von jeweiligen Gesten auf der Grundlage des zuvor unter Bezugnahme auf die Figuren 1 und 2 beschriebenen grundlegenden Bedienkonzepts erfasst und werden als Reaktion auf jeweilige Gesten entsprechende Verarbeitungen, wie zum Beispiel ein Aktivieren, Steuern oder Abbrechen durchgeführt.

Es ist anzumerken, dass die Anordnung und die Anzahl der Infrarot-Sensoren nicht auf den in Fig. 3 gezeigten Aufbau beschränkt sind. Vielmehr kann eine beliebige Anordnung und Anzahl der Infrarot-Sensoren verwendet werden, solange das in den Figuren 1 und 2 gezeigte grundlegende Bedienkonzept mittels der jeweiligen Anordnung und der jeweiligen Anzahl der Infrarot-Sensoren realisierbar ist. Es ist nicht erforderlich, dass die Anzahl der Erfassungsbereiche derart festgelegt ist, dass, wie es in Fig. 1 und 2 gezeigt ist, ein mittiger Erfassungsbereich und ein linker und ein rechter Erfassungsbereich vorhanden sind. Es ist ausreichend, wenn mindestens so viele Erfassungsbereiche vorhanden sind, dass eine dynamische Geste und deren Richtung durch ein Durchlaufen von Erfassungsbereichen von einer statischen Geste sicher unterscheidbar sind, die in mindestens einem Erfassungsbereich erfasst wird. Im einfachsten Fall sind zwei Erfassungsbereiche ausreichend.

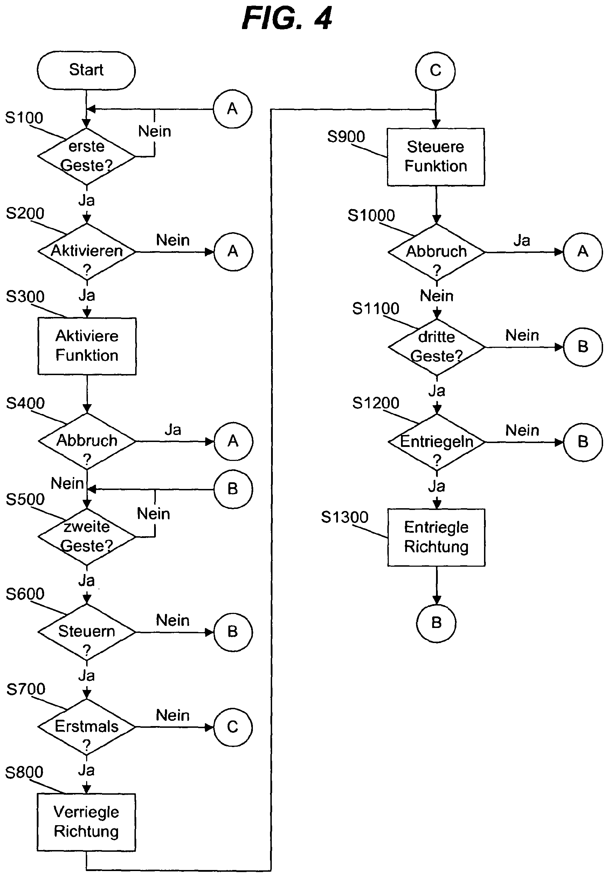

Fig. 4 zeigt ein Flussdiagramm eines Verfahrens zum Bedienen von auf der Anzeigeeinheit dargestellten Funktionen unter Verwendung von im dreidimensionalen Raum ausgeführten Gesten gemäß dem Ausführungsbeispiel der vorliegenden Erfindung.

Es ist anzumerken, dass ein Verarbeitungsfluss des Flussdiagramms in Fig. 4 zum Beispiel nach einem Initialisierungszeitpunkt, wie zum Beispiel nach einem Einschalten einer Zündung des Fahrzeugs, eingeschaltet wird und zyklisch wiederholt durchgeführt wird, bis ein Beendigungszeitpunkt, wie zum Beispiel ein Ausschalten der Zündung des Fahrzeugs, erreicht ist. Alternativ kann der Initialisierungszeitpunkt zum Beispiel der Zeitpunkt des Startens eines Motors des Fahrzeugs und/oder der Beendigungszeitpunkt der Zeitpunkt des Abstellens des Motors des Fahrzeugs sein. Andere Initialisierungszeitpunkte und Beendigungszeitpunkte sind je nach vorliegendem Anwendungszweck ebenso möglich.

Weiterhin ist anzumerken, dass in dem Fall des zuvor beschriebenen Unterscheidens zwischen einer Geste des Fahrers und des Beifahrers das Verfahren des Flussdiagramms in Fig. 4 sowohl für die Fahrer- als auch die Beifahrerseite durchgeführt wird. Mittels der Erfassungsbereiche 70 kann in jeweiligen Schritten des Flussdiagramms in Fig. 4 bestimmt werden, welche Geste welcher Seite zugeordnet ist. Auf diese Weise kann der in Fig. 4 gezeigte Verarbeitungsablauf zweckmäßig zum Beispiel parallel, seriell oder auf eine verschachtelte Weise für jede Seite durchgeführt werden.

In Schritt S100 wird bestimmt, ob eine erste Geste erfasst wird oder nicht. Falls die erste Geste nicht erfasst wird, was einer Antwort "Nein" in Schritt S100 entspricht, kehrt der Verarbeitungsablauf zu Schritt 100 zurück. Falls die erste Geste erfasst wird, was einer Antwort "Ja" in Schritt S100 entspricht, schreitet der Verarbeitungsablauf zu Schritt S200 fort.

In Schritt S200 wird bestimmt, ob die erfasste erste Geste eine einem Aktivieren eines Steuerns einer Funktion zugeordnete Geste ist oder nicht. Falls die erste Geste keine dem Aktivieren des Steuerns der Funktion zugeordnete Geste ist, was einer Antwort "Nein" in Schritt S200 entspricht, kehrt der Verarbeitungsablauf zu Schritt S100 zurück. Falls die erste Geste die dem Aktivieren des Steuerns der Funktion zugeordnete Geste ist, was einer Antwort "Ja" in Schritt S200 entspricht, schreitet der Verarbeitungsablauf zu Schritt S300 fort.

Die dem Aktivieren des Steuerns der Funktion zugeordnete Geste ist eine erste vorbestimmte Geste, die für eine erste vorbestimmte Zeitdauer in einem ersten vorbestimmten Bereich des dreidimensionalen Raums statisch ist. Die erste vorbestimmte Geste wird erfasst, wie es zuvor unter Bezugnahme auf die Figuren 1 bis 3 beschrieben worden ist.

In Schritt S300 wird das Steuern der Funktion aktiviert. Nach Schritt S300 schreitet der Verarbeitungsablauf zu Schritt S400 fort.

Bei dem Aktivieren des Steuerns der Funktion wird auf der Anzeigeeinheit ein Anzeigeelement angezeigt, das das Aktivieren der Funktion anzeigt, wie es zum Beispiel in Fig. 1 gezeigt ist.

In Schritt S400 wird bestimmt, ob eine vorbestimmte Abbruchbedingung erfüllt ist oder nicht. Falls die vorbestimmte Abbruchbedingung erfüllt ist, was einer Antwort "Ja" in Schritt S400 entspricht, kehrt der Verarbeitungsablauf zu Schritt S100 zurück. Falls die Abbruchbedingung nicht erfüllt ist, was einer Antwort "Nein" in Schritt S400 entspricht, schreitet der Verarbeitungsablauf zu Schritt S500 fort.

Die vorbestimmte Abbruchbedingung kann zum Beispiel sein, dass für eine vierte vorbestimmte Zeitdauer keine Geste erfasst worden ist. Falls die vorbestimmte Abbruchbedingung in Schritt S400 erfüllt ist, wird das das Aktivieren der Funktion darstellende Anzeigeelement nicht mehr auf der Anzeigeeinheit angezeigt.

In Schritt S500 wird bestimmt, ob eine zweite Geste erfasst wird oder nicht. Falls die zweite Geste nicht erfasst wird, was einer Antwort "Nein" in Schritt S500 entspricht, kehrt der Verarbeitungsablauf zu Schritt S500 zurück. Falls die zweite Geste erfasst wird, was einer Antwort "Ja" in Schritt S500 entspricht, schreitet der Verarbeitungsablauf zu Schritt S600 fort.

In Schritt S600 wird bestimmt, ob die erfasste zweite Geste eine einem Steuern der Funktion zugeordnete Geste ist oder nicht. Falls die zweite Geste keine dem Steuern der Funktion zugeordnete Geste ist, was einer Antwort "Nein" in Schritt S600 entspricht, kehrt der Verarbeitungsablauf zu Schritt S500 zurück. Falls die zweite Geste die dem Steuern der Funktion zugeordnete Geste ist, was einer Antwort "Ja" in Schritt S600 entspricht, schreitet der Verarbeitungsablauf zu Schritt S700 fort.

Die dem Steuern der Funktion zugeordnete Geste ist eine zweite vorbestimmte Geste, die in einem zweiten vorbestimmten Bereich des dreidimensionalen Raums dynamisch ist. Die zweite vorbestimmte Geste wird erfasst, wie es zuvor unter Bezugnahme auf die Figuren 1 bis 3 beschrieben worden ist.

In Schritt S700 wird bestimmt, ob die zweite vorbestimmte Geste erstmals erfasst worden ist oder nicht. Falls die zweite vorbestimmte Geste nicht erstmals erfasst worden ist, was einer Antwort "Nein" in Schritt S700 entspricht, schreitet der Verarbeitungsablauf zu Schritt S900 fort. Falls die zweite vorbestimmte Geste erstmals erfasst worden ist, was einer Antwort "Ja" in Schritt S700 entspricht, schreitet der Verarbeitungsablauf zu Schritt S800 fort.

In Schritt S800 wird eine Bedienrichtung der zu steuernden Funktion in einer Richtung verriegelt, die mit einer Richtung eines Durchführens der zweiten vorbestimmten Geste übereinstimmt. Dies bedeutet, dass bei einem weiteren Durchführen von zweiten vorbestimmten Gesten, wie es nachstehend beschrieben ist, lediglich derartige zweite vorbestimmte Gesten als gültig erfasst werden, deren Richtung eines Durchführens in der verriegelten Bedienrichtung ist. Nach Schritt S800 schreitet der Verarbeitungsablauf zu Schritt S900 fort.

In Schritt S900 wird die Funktion gesteuert. Nach Schritt S900 schreitet der Verarbeitungsablauf zu Schritt S1000 fort.

Bei dem Steuern der Funktion wird auf der Anzeigeeinheit ein Anzeigeelement angezeigt, das das Steuern der Funktion anzeigt, wie es zum Beispiel in Fig. 2 gezeigt ist.

In Schritt S1000 wird bestimmt, ob eine vorbestimmte Abbruchbedingung erfüllt ist oder nicht. Falls die vorbestimmte Abbruchbedingung erfüllt ist, was einer Antwort "Ja" in Schritt S1000 entspricht, kehrt der Verarbeitungsablauf zu Schritt S100 zurück. Falls die Abbruchbedingung nicht erfüllt ist, was einer Antwort "Nein" in Schritt S1000 entspricht, schreitet der Verarbeitungsablauf zu Schritt S1100 fort.

Die vorbestimmte Abbruchbedingung kann zum Beispiel sein, dass für die vierte vorbestimmte Zeitdauer keine Geste erfasst worden ist. Falls die vorbestimmte Abbruchbedingung in Schritt S1000 erfüllt ist, wird das das Steuern der Funktion darstellende Anzeigeelement nicht mehr auf der Anzeigeeinheit angezeigt.

In Schritt S1100 wird bestimmt, ob eine dritte Geste erfasst wird oder nicht. Falls die dritte Geste nicht erfasst wird, was einer Antwort "Nein" in Schritt S1100 entspricht, kehrt der Verarbeitungsablauf zu Schritt 500 zurück. Falls die dritte Geste erfasst wird, was einer Antwort "Ja" in Schritt S1100 entspricht, schreitet der Verarbeitungsablauf zu Schritt S1200 fort.

In Schritt S1200 wird bestimmt, ob die erfasste dritte Geste eine einem Entriegeln einer Richtung des Steuerns der Funktion zugeordnete Geste ist oder nicht. Falls die dritte Geste keine dem Entriegeln der Richtung des Steuerns der Funktion zugeordnete Geste ist, was einer Antwort "Nein" in Schritt S1200 entspricht, kehrt der Verarbeitungsablauf zu Schritt S500 zurück. Falls die dritte Geste die dem Entriegeln der Richtung des Steuerns der Funktion zugeordnete Geste ist, was einer Antwort "Ja" in Schritt S1200 entspricht, schreitet der Verarbeitungsablauf zu Schritt S1300 fort.

In Schritt S1300 wird die Richtung des Steuerns der Funktion entriegelt. Nach Schritt S1300 kehrt der Verarbeitungsablauf zu Schritt S500 zurück.

Die dem Entriegeln der Richtung des Steuerns der Funktion zugeordnete Geste ist eine dritte vorbestimmte Geste, die für eine dritte vorbestimmte Zeitdauer in einem dritten vorbestimmten Bereich des dreidimensionalen Raums statisch ist. Die dritte vorbestimmte Geste wird erfasst, wie es zuvor unter Bezugnahme auf die Figuren 1 bis 3 beschrieben worden ist.

Das zuvor beschriebene Verfahren kann mittels Einrichtungen realisiert werden, die eine Vorrichtung zum Bedienen von auf der Anzeigeeinheit des Fahrzeugs angezeigten Funktionen ausbilden. Die Anzeigeeinheit ist vorzugsweise eine zentrale Anzeige des Fahrzeugs, vorzugsweise eines Kraftfahrzeugs.

Eine Anwendung des zuvor beschriebenen Ausführungsbeispiels ist zum Beispiel ein Bedienen bzw. Vor- und Zurückschalten eines Menüs, wie zum Beispiel eines Hauptmenüs, eines Radiosenders oder eines Mediums, wie zum Beispiel einer CD, in einer zentralen Telematikeinheit des Fahrzeugs mittels Gesten, wie zum Beispiel horizontal ausgeführter Gesten, d.h. Hand- oder Fingerbewegungen durch den Nutzer, ohne eine Anzeige, wie zum Beispiel einen Touchscreen, oder ein Bedienelement, wie zum Beispiel einen Touchpad, zu berühren.

Ein Lernprozess des Nutzers kann durch optische und/oder akustische Rückmeldungen während einer Gestenbedienung unterstützt werden, wodurch nach einer Lernphase des Nutzers eine Blindbedienung durch den Nutzer ermöglicht wird. Der Nutzer kann derartige optische und/oder akustische Rückmeldungen manuell ausschalten oder derartige optische und/oder akustische Rückmeldungen werden nach Erkennen einer korrekten Gestenbedienung durch den Nutzer zum Beispiel für eine vorbestimmte Zeitdauer automatisch ausgeschaltet.

Obgleich in den Figuren 1 bis 3 gezeigt ist, dass jeweilige Infrarot-Sensoren unterhalb einer Anzeigeeinheit angeordnet sind, können jeweilige Infrarot-Sensoren an anderen Orten, wie zum Beispiel oberhalb der Anzeigeeinheit, seitlich der Anzeigeeinheit, an einem anderen zweckmäßigen Ort oder zweckmäßigen Kombinationen von derartigen Orten angeordnet sein.

Durch die zuvor beschriebene Gestenbedienung wird eine einfache und schnelle Bedienbarkeit realisiert, die einen Bedienkomfort, eine Bedienflexibilität und ein Bedienerlebnis für den Nutzer steigert.

Das zuvor beschriebene Ausführungsbeispiel ist als Computerprogrammprodukt, wie zum Beispiel ein Speichermedium, realisierbar, das dazu ausgelegt ist, im Zusammenwirken mit einem Computer oder mehreren Computern, das heißt Computersystemen, oder sonstigen Recheneinheiten ein Verfahren gemäß dem vorhergehenden Ausführungsbeispiel auszuführen. Das Computerprogrammprodukt kann dazu ausgelegt sein, dass das Verfahren erst nach Durchführen einer vorbestimmten Routine, wie zum Beispiel einer Setup-Routine, ausgeführt wird.

## Patentansprüche

1. Verfahren zum Bedienen von auf einer Anzeigeeinheit eines Fahrzeugs angezeigten Funktionen unter Verwendung von im dreidimensionalen Raum ausgeführten Gesten, das aufweist:
**a)** Bestimmen, ob eine im dreidimensionalen Raum durchgeführte erste Geste erfasst wird oder nicht;
**b)** Bestimmen, ob die erste Geste eine einem Aktivieren eines Steuerns einer Funktion zugeordnete Geste ist oder nicht, falls bestimmt wird, dass die erste Geste erfasst worden ist;
**c)** Aktivieren des Steuerns der Funktion, falls bestimmt wird, dass die erfasste erste Geste die dem Aktivieren des Steuerns der Funktion zugeordnete Geste ist;
**d)** Bestimmen, ob eine im dreidimensionalen Raum durchgeführte zweiten Geste erfasst wird oder nicht;
**e)** Bestimmen, ob die erfasste zweite Geste eine dem Steuern der Funktion zugeordnete Geste ist oder nicht, falls bestimmt wird, dass die zweite Geste erfasst worden ist; und
**f)** Steuern der Funktion, falls bestimmt worden ist, dass die erfasste erste Geste die dem Aktivieren des Steuerns der Funktion zugeordnete Geste ist, und falls bestimmt wird, dass die erfasste zweite Geste die dem Steuern der Funktion zugeordnete Geste ist, **dadurch gekennzeichnet, dass**
in Schritt **f)** eine Richtung des Steuerns der Funktion durch eine Richtung eines Durchführens der zweiten Geste festgelegt und verriegelt wird, und
das Verriegeln der Richtung des Steuerns der Funktion bei wiederholtem Durchführen der Schritte **d)** bis **f)** unmittelbar hintereinander nach Durchführen der Schritte **a)** bis **c)** aufrecht erhalten wird.

2. Verfahren nach Anspruch 1, **dadurch gekennzeichnet, dass** in Schritt **b)** bestimmt wird, dass die erfasste erste Geste die dem Aktivieren des Steuerns der Funktion zugeordnete Geste ist, falls die erfasste erste Geste eine erste vorbestimmte Geste ist, die für eine erste vorbestimmte Zeitdauer in einem ersten vorbestimmten Bereich des dreidimensionalen Raums statisch ist.

3. Verfahren nach Anspruch 1 oder 2, **dadurch gekennzeichnet, dass** in Schritt **e)** bestimmt wird, dass die erfasste zweite Geste die dem Steuern der Funktion zugeordnete Geste ist, falls die erfasste zweite Geste eine zweite vorbestimmte Geste ist, die in einem zweiten vorbestimmten Bereich des dreidimensionalen Raums dynamisch ist.

4. Verfahren nach einem der Ansprüche 1 bis 3, **gekennzeichnet durch**:
**g)** Bestimmen, ob eine im dreidimensionalen Raum durchgeführte dritte Geste erfasst wird oder nicht;
**h)** Bestimmen, ob die dritte Geste eine einem Entriegeln der Richtung des Steuerns der Funktion zugeordnete Geste ist oder nicht, falls bestimmt wird, dass die dritte Geste erfasst worden ist;
**i)** Entriegeln der Richtung des Steuerns der Funktion, falls bestimmt wird, dass die erfasste dritte Geste die dem Entriegeln der Richtung des Steuerns der Funktion zugeordnete Geste ist.

5. Verfahren nach Anspruch 4, **dadurch gekennzeichnet, dass** in Schritt **h)** bestimmt wird, dass die erfasste dritte Geste die dem Entriegeln der Richtung des Steuerns der Funktion zugeordnete Geste ist, falls bestimmt wird, dass die erfasste dritte Geste eine dritte vorbestimmte Geste ist, die für eine dritte vorbestimmte Zeitdauer in einem dritten vorbestimmten Bereich des dreidimensionalen Raums statisch ist.

6. Verfahren nach einem der Ansprüche 1 bis 5, **dadurch gekennzeichnet, dass** in Schritt c) ein das Aktivieren der Funktion darstellendes Anzeigeelement auf der Anzeigeeinheit angezeigt wird.

7. Verfahren nach Anspruch 6, **dadurch gekennzeichnet, dass** das das Aktivieren der Funktion darstellende Anzeigelement nach einer vierten vorbestimmten Zeitdauer, in der keine Geste erfasst wird, nicht mehr auf der Anzeigeeinheit angezeigt wird.

8. Vorrichtung zum Bedienen von auf einer Anzeigeeinheit eines Fahrzeugs angezeigten Funktionen unter Verwendung von im dreidimensionalen Raum ausgeführten Gesten, die Einrichtungen aufweist, die dazu ausgelegt sind, ein Verfahren nach einem der Ansprüche 1 bis 7 auszuführen.

9. Vorrichtung nach Anspruch 8, **gekennzeichnet durch** eine Infratrot-Erfassungseinrichtung zum Erfassen der im dreidimensionalen Raum ausgeführten Gesten.

10. Vorrichtung nach Anspruch 9, **dadurch gekennzeichnet, dass** die Infrarot-Erfassungseinrichtung mehrere Infrarot-Sensoren aufweist, die in einer oder mehreren Zeilen angeordnet sind.

11. Computerprogrammprodukt zum Bedienen von auf einer Anzeigeeinheit eines Fahrzeugs angezeigten Funktionen unter Verwendung von im dreidimensionalen Raum ausgeführten Gesten, das dazu ausgelegt ist, im Zusammenwirken mit einem Computer oder einem Computersystem unmittelbar oder, nach Ausführen einer vorbestimmten Routine, mittelbar ein Verfahren nach einem der Ansprüche 1 bis 7 auszuführen.

## Claims

1. Method for operating functions displayed on a display unit of a vehicle using gestures performed in a three-dimensional space, the method comprising:
a) the determination whether or not a first gesture performed in the three-dimensional space is detected;
b) the determination whether or not the first gesture is a gesture assigned to an activation of a control of a function, if it is determined that the first gesture has been detected;
c) the activation of the control of the function, if it is determined that the detected first gesture is the gesture assigned to the activation of the control of the function;
d) the determination whether or not a second gesture performed in the three-dimensional space is detected;
e) the determination whether or not the detected second gesture is a gesture assigned to the control of the function, if it is determined that the second gesture has been detected; and
f) the control of the function, if it has been determined that the detected first gesture is the gesture assigned to the activation of the control of the function, and if it is determined that the detected second gesture is the gesture assigned to the control of the function,
**characterised in that**
in step f) a direction of the control of the function is determined and locked by a direction of a performance of the second gesture, and **in that**
the locking of the direction of the control of the function is maintained at a repeated, immediately consecutive performance of steps d) to f) after the performance of steps a) to c).

2. Method according to claim 1, **characterised in that** in step b) it is determined that the detected first gesture is the gesture assigned to the activation of the control of the function, if the detected first gesture is a first predetermined gesture which is static for a first predetermined period of time in a first predetermined region of the three-dimensional space.

3. Method according to claim 1 or 2, **characterised in that** in step e) it is determined that the detected second gesture is the gesture assigned to the control of the function, if the detected second gesture is a second predetermined gesture which is dynamic in a second predetermined region of the three-dimensional space.

4. Method according to any of claims 1 to 3, **characterised by**:
g) the determination whether or not a third gesture performed in the three-dimensional space is detected;
h) the determination whether or not the third gesture is a gesture assigned to an unlocking of the direction of the control of the function, if it is determined that the third gesture has been detected;
i) the unlocking of the direction of the control of the function, if it is determined that the detected third gesture is the gesture assigned to the unlocking of the direction of the control of the function.

5. Method according to claim 4, **characterised in that** in step h) it is determined that the detected third gesture is the gesture assigned to the unlocking of the direction of the control of the function, if it is determined that the detected third gesture is a third predetermined gesture which is static for a third predetermined period of time in a third predetermined region of the three-dimensional space.

6. Method according to any of claims 1 to 5, **characterised in that** in step c) a display element representing the activation of the function is displayed on the display unit.

7. Method according to claim 6, **characterised in that** the display element representing the activation of the function is no longer displayed on the display unit after a fourth predetermined period of time in which no gesture is detected.

8. Device for operating functions displayed on a display unit of a vehicle using gestures performed in a three-dimensional space, the device comprising facilities designed for the execution of a method according to any of claims 1 to 7.

9. Device according to claim 8, **characterised by** an infrared detection device for the detection of the gestures performed in the three-dimensional space.

10. Device according to claim 9, **characterised in that** the infrared detection device comprises a plurality of infrared sensors arranged in one or more rows.

11. Computer programme product for operating functions displayed on a display unit of a vehicle using gestures performed in a three-dimensional space, the computer programme product being designed for the execution, directly or indirectly following the execution of a predetermined routine, of a method according to any of claims 1 to 7 in cooperation with a computer or a computer system.

## Revendications

1. Procédé d'utilisation de fonctions affichées sur une unité d'affichage d'un véhicule automobile à l'aide de gestes effectués dans un espace tridimensionnel, qui consiste à :
a) déterminer si un premier geste effectué dans l'espace tridimensionnel est détecté ou non ;
b) déterminer si le premier geste est un geste associé à une activation d'une commande d'une fonction ou non, dans le cas où il est déterminé que le premier geste a été détecté ;
c) activer la commande de la fonction dans le cas où il est déterminé que le premier geste détecté est le geste associé à l'activation de la commande de la fonction ;
d) déterminer si un deuxième geste effectué dans l'espace tridimensionnel est détecté ou non ;
e) déterminer si le deuxième geste détecté est un geste associé à la commande de la fonction ou non, dans le cas où il est déterminé que le deuxième geste a été détecté ; et
f) commander la fonction dans le cas où il est déterminé que le premier geste détecté est le geste associé à l'activation de la commande de la fonction et dans le cas où il est déterminé que le deuxième geste détecté est le geste associé à la commande de la fonction, **caractérisé en ce que**
dans l'étape f) une direction de la commande de la fonction est déterminée et verrouillée par une direction de l'exécution du deuxième geste et le verrouillage de la direction de la commande de la fonction est maintenue lors de la répétition des étapes d) à f) immédiatement les unes après les autres après la réalisation des étapes a) à c).

2. Procédé selon la revendication 1, **caractérisé en ce que** dans l'étape b) il est déterminé que le premier geste détecté est le geste associé à l'activation de la commande de la fonction, si le premier geste détecté est un premier geste prédéfini, qui est statique pour une première durée prédéfinie dans une première zone prédéfinie de l'espace tridimensionnel.

3. Procédé selon la revendication 1 ou la revendication 2, **caractérisé en ce que** dans l'étape e) il est déterminé que le deuxième geste détecté est le geste associé à la commande de la fonction, si le deuxième geste détecté est un deuxième geste prédéfini, qui est dynamique dans une deuxième zone prédéfinie de l'espace tridimensionnel.

4. Procédé selon l'une quelconque des revendications 1 à 3, **caractérisé par** :
g) la détermination si un troisième geste effectué dans l'espace tridimensionnel est détecté ou non ;
h) la détermination si le troisième geste est un geste associé à un déverrouillage de la direction de la commande de la fonction ou non, s'il est déterminé que le troisième geste a été détecté ;
i) le déverrouillage de la direction de la commande de la fonction, s'il est déterminé que le troisième geste détecté est le geste associé au déverrouillage de la direction de la commande de la fonction.

5. Procédé selon la revendication 4, **caractérisé en ce que** dans l'étape h) il est déterminé que le troisième geste détecté est le geste associé au déverrouillage de la direction de la commande de la fonction, s'il est déterminé que le troisième geste détecté est un troisième geste prédéfini qui est statique pour une troisième durée prédéfinie dans une troisième zone prédéfinie de l'espace tridimensionnel.

6. Procédé selon l'une quelconque des revendications 1 à 5, **caractérisé en ce que** dans l'étape c) un élément d'affichage représentant l'activation de la fonction s'affiche sur l'unité d'affichage.

7. Procédé selon la revendication 6, **caractérisé en ce que** l'élément d'affichage représentant l'activation de la fonction après une quatrième durée prédéfinie, dans laquelle aucun geste n'est détecté, ne s'affiche plus sur l'unité d'affichage.

8. Dispositif d'utilisation de fonctions affichées sur une unité d'affichage d'un véhicule automobile à l'aide de gestes effectués dans l'espace tridimensionnel, qui présentent des dispositifs qui sont conçus pour exécuter un procédé selon l'une quelconque des revendications 1 à 7.

9. Dispositif selon la revendication 8, **caractérisé par** un dispositif de détection infrarouge destiné à détecter les gestes effectués dans l'espace tridimensionnel.

10. Dispositif selon la revendication 9, **caractérisé en ce que** le dispositif de détection infrarouge comprend plusieurs capteurs infrarouge qui sont disposés dans une ou plusieurs lignes.

11. Produit-programme informatique destiné à utiliser des fonctions affichées sur une unité d'affichage d'un véhicule automobile à l'aide de gestes effectués dans l'espace tridimensionnel qui est conçu pour exécuter immédiatement un procédé selon l'une quelconque des revendications 1 à 7 en coopération avec un ordinateur ou un système informatique immédiatement ou après exécution d'une routine prédéfinie.
